# EUROPÄISCHE PATENTANMELDUNG

(11) **EP 1 914 449 A2**
(43) Veröffentlichungstag der Anmeldung: **23.04.2008**
(21) Anmeldenummer: 07020548.9
(22) Anmeldetag: 19.10.2007
(51) Int. Cl.: F16H 47/06

(54) **Fahrzeugantriebsstrang**

(30) Priorität: 20.10.2006 DE 102006050419
(71) Anmelder: Voith Turbo GmbH & Co. KG, 89522 Heidenheim (DE)
(72) Erfinder: Becke, Martin, 89075 Ulm (DE); Klement, Werner, Prof., 89520 Heidenheim (DE); Koch, Werner, 73326 Deggingen (DE); Brockmann, Rolf, 89522 Heidenheim (DE)
(74) Vertreter: Schmidt, Sven Hendrik

(57) **Zusammenfassung**

Die Erfindung betrifft einen Fahrzeugantriebsstrang mit einem Eingang (1) zum Einleiten einer Antriebsleistung von einem Antriebsmotor des Fahrzeugs, mit einem Ausgang (2) zum Abgeben der Antriebsleistung auf Antriebsräder des Fahrzeugs und mit einem Antriebsstrang (3) zum Übertragen der Antriebsleistung vom Eingang zum Ausgang, wobei der Antriebsstrang eine hydrodynamische Kupplung (4) oder einen hydrodynamischen Wandler (5) zum hydrodynamischen Anfahren des Fahrzeugs umfasst. Die hydrodynamische Kupplung oder der hydrodynamische Wandler weist ein Pumpenrad (6) und ein Turbinenrad (7) auf, welche mittels einer mechanischen Überbrückungskupplung (8) mechanisch miteinander verbindbar sind. Der Antriebsstrang umfasst ferner ein Getriebe (9) mit einem Getriebeeingang (9.1) und einem Getriebeausgang (9.2), wobei der Getriebeausgang in einer mechanischen Triebverbindung mit dem Ausgang (2) steht, in eine solche schaltbar ist oder den Ausgang ausbildet. Das Pumpenrad steht in einer mechanischen Triebverbindung mit dem Eingang oder ist in eine solche schaltbar, und das Turbinenrad steht in einer mechanischen Triebverbindung mit dem Schaltgetriebeeingang oder ist in eine solche schaltbar. Dem Turbinenrad ist eine Bremseinrichtung zugeordnet, um das Turbinenrad abzubremsen und/oder festzusetzen.
Die Erfindung ist dadurch gekennzeichnet, dass die hydrodynamische Kupplung oder der hydrodynamische Wandler ausschließlich über einen einzigen Getriebeeingang mit einer einzigen Getriebeeingangswelle in einer Triebverbindung mit dem Getriebe steht, und diese Getriebeeingangswelle mittels der Bremseinrichtung, welche als mechanische Reibbremseinrichtung ausgeführt ist, für das Turbinenrad abbremsbar und/oder festsetzbar ist, und die Triebverbindung frei von einem Freilauf und einer Trennkupplung ist.

## Beschreibung

Die Erfindung betrifft einen Kraftfahrzeugantriebsstrang, beginnend - in Richtung des Antriebsleistungsflusses im Traktionsbetrieb des Kraftfahrzeugs gesehen - an einem Eingang zum Einleiten einer Antriebsleistung, die durch den Antriebsmotor des Fahrzeugs erzeugt wird, und endend an einem Ausgang, an welchem die Antriebsleistung auf die Antriebsräder des Fahrzeugs beziehungsweise eine entsprechende Achse oder Achsen übertragen wird.

In der Regel wird der gesamte zuvor beschriebene Antriebsstrang durch ein sogenanntes "Fahrzeuggetriebe" dargestellt, das heißt jene Komponenten in einem Getriebegehäuse, die mit einer Eingangsseite an dem Antriebsmotor, insbesondere dessen Kurbelwelle, angeschlossen sind, und welche auf ihrer Abtriebsseite eine Getriebeausgangswelle aufweisen, die in der Regel an eine Gelenkwelle angeschlossen ist. Dieses Fahrzeuggetriebe kann als Handschaltgetriebe (manuelles Getriebe), automatisiertes Schaltgetriebe oder als Automatgetriebe ausgebildet sein.

Wenn im Rahmen der vorliegenden Beschreibung hingegen von dem Getriebe die Rede ist, so ist hierbei nur jener Teil des gesamten "Fahrzeuggetriebes" zu verstehen, der in Richtung des Antriebsleistungsflusses im Traktionsbetrieb gesehen hinter einem Anfahrelement angeordnet ist. Das Anfahrelement dient dazu, das Fahrzeug hydrodynamisch anzufahren, das heißt das Anfahrelement umfasst eine hydrodynamische Kupplung oder einen hydrodynamischen Wandler, um diese Funktion auszuführen. Diese hydrodynamische Kupplung beziehungsweise der hydrodynamische Wandler kann daher auch als Anfahrkupplung beziehungsweise Anfahrwandler bezeichnet werden. Zwar ist dieses Anfahrelement nach herkömmlicher Bezeichnung ebenfalls im "Fahrzeuggetriebe" angeordnet, und zwar zusammen mit einer Anzahl von Schaltstufen, welche im Fahrzeuggetriebe vorgesehen sind, um die gewünschte Anzahl von mechanischen Gängen beziehungsweise mechanischen Durchtrieben verschiedener Übersetzungen darzustellen. Eben diese Schaltstufen beziehungsweise die zugehörigen Zahnradpearungen, in der Regel in Form von Planetenstufen oder Planetengetrieben, werden vorliegend jedoch als Getriebe bezeichnet, welches eine Getriebeeingangswelle und eine Getriebeausgangswelle aufweist und dem Anfahrelement in Kraftflussrichtung im Traktionsbetrieb nachgeordnet ist.

Der hydrodynamischen Kupplung beziehungsweise dem hydrodynamischen Wandler, welche/welcher somit in Richtung des Antriebsleistungsflusses vor dem Getriebe angeordnet ist, ist eine Überbrückungskupplung zugeordnet beziehungsweise parallelgeschaltet, mit welcher die hydrodynamische Kupplung beziehungsweise der hydrodynamische Wandler mechanisch überbrückt werden kann, um den Wirkungsgrad der Leistungsübertragung im Fahrbetrieb, das heißt nach Abschluss des Anfahrvorgangs zu erhöhen. Somit kann die Antriebsleistung bei geschlossener Überbrückungskupplung rein mechanisch von der Pumpenseite zu der Turbinenseite beziehungsweise von der Antriebsseite zur Abtriebseite übertragen werden, und bei geöffneter Überbrückungskupplung hydrodynamisch über den Arbeitsmediumkreislauf der hydrodynamischen Kupplung beziehungsweise des hydrodynamischen Wandlers. Die hydrodynamische Kupplung beziehungsweise der hydrodynamische Wandler zusammen mit der mechanischen Überbrückungskupplung können auch als Anfahrelement bezeichnet werden.

Die zuvor beschriebenen Merkmale eines Fahrzeugantriebsstrangs sind in verschiedenen Ausführungen bekannt. Um die hydrodynamische Kupplung in einem solchen Fahrzeugantriebsstrang als hydrodynamische Bremse (Retarder) verwenden zu können, ist ferner vorgeschlagen worden, eine Bremseinrichtung vorzusehen, um ein Schaufelrad der hydrodynamischen Kupplung abzubremsen.

Bei den bekannten Ausführungen ist die hydrodynamische Kupplung meist über wenigstens zwei Getriebeeingangswellen in einer Triebverbindung mit dem Getriebe verbunden. In einer der beiden Triebverbindungen ist, um die gewünschte Funktionalität zu erreichen, ein Freilauf vorgesehen. Beispielsweise kann das erste Schaufelrad der hydrodynamischen Kupplung mit einem ersten Vorgelegesatz des Getriebes und das zweite Schaufelrad der hydrodynamischen Kupplung mit einem zweiten Vorgelegesatz des hydrodynamischen Getriebes verbunden sein.

Auch Ausführungen, bei welchem die hydrodynamische Kupplung über nur eine einzige Getriebeeingangswelle in einer Triebverbindung mit dem Getriebe steht, sind bekannt. Beispielsweise wird auf das Dokument WO 02/21020 A1 verwiesen. In dieser Triebverbindung ist notwendigerweise der genannte Freilauf vorgesehen, um die gewünschte Funktionalität zu erreichen.

Ein Nachteil der bekannten Ausführungen ist darin zu sehen, dass die zusätzliche Bremseinrichtung, um ein Schaufelrad der hydrodynamischen Kupplung abzubremsen, einerseits einen erhöhten konstruktiven Aufwand bedeutet und andererseits "nur" zum Abbremsen des Schaufelrads herangezogen werden kann. Somit ist das Verhältnis von Aufwand zur Wirkung für bestimmte Anwendungsfälle als vergleichsweise ungünstig anzusehen,

Zum weiteren Stand der Technik wird auf die Dokumente DE 33 21 948 C2 und DE 196 50 380 C1 verwiesen, welche Antriebsstränge mit hydrodynamischen Wandlern beziehungsweise hydrodynamischen Kupplungen und hydrodynamischen Retardem als Bremseinrichtung zeigen.

Der Erfindung liegt die Aufgabe zugrunde, einen Fahrzeugantriebsstrang mit einer hydrodynamischen Kupplung oder einem hydrodynamischen Wandler in Richtung des Antriebaleisturigsflusses im Traktionsbetrieb vor einem Getriebe anzugeben, dessen konstruktiver Aufwand im Vergleich zum Stand der Technik nicht wesentlich erhöht oder vorteilhaft sogar vermindert ist, und bei welchem der hydrodynamischen Kupplung beziehungsweise dem hydrodynamischen Wandler eine Bremseinrichtung zugeordnet ist, die vielseitig verwendet werden kann.

Die erfindungsgemäße Aufgabe wird durch einen Fahrzeugantriebsstrang mit den Merkmalen von Anspruch 1 gelöst. Die abhängigen Ansprüche beschreiben vorteilhafte und besonders zweckmäßige Ausgestaltungen der Erfindung.

Der erfindungsgemäße Fahrzeugantriebsstrang weist im Unterschied zum genannten Stand der Technik ein Getriebe auf, beispielsweise ein Handschaltgetriebe, automatisiertes Schaltgetriebe oder auch ein Automatgetriebe, das über einen einzigen Getriebeeingang mit einer einzigen Getriebeeingangswelle mit der hydrodynamischen Kupplung oder dem hydrodynamischen Wandler verbunden ist, welche/welcher in Antriebsleistungsflussrichtung im Traktionsbetrieb gesehen vor dem Getriebe angeordnet ist. Insbesondere ist dieser Getriebeeingang der einzige Getriebeeingang, den das Getriebe aufweist, Die Triebverbindung zwischen der hydrodynamischen Kupplung oder dem hydrodynamischen Wandler und dem Getriebe, über den genannten Getriebeeingang, ist frei von einem Freilauf und ferner frei von einer Trennkupplung. Es besteht demnach eine ständige mechanische Triebverbindung zwischen der hydrodynamischen Kupplung oder dem hydrodynamischen Wandler und dem Getriebeeingang in beide Drehrichtungen.

Aufgrund dessen, dass dem Turbinenrad der hydrodynamischen Kupplung, welche frei von einem Leitrad ist, oder des hydrodynamischen Wandlers, welcher neben dem Pumpenrad und dem Turbinenrad wenigstens ein Leitrad aufweist, eine Bremseinrichtung zugeordnet ist, mittels welcher das Turbinenrad abgebremst und/oder festgesetzt werden kann, ist es möglich, die Getriebeeingangswelle, über welche das Turbinenrad in einer Triebverbindung mit dem Getriebe verbunden ist, mittels dieser Bremseinrichtung abzubremsen und/oder festzusetzen. Die Bremseinrichtung ist als mechanische Reibbremse ausgeführt und steht ebenfalls in ständiger mechanischer Triebverbindung, frei von einem Freilauf oder einer Trennkupplung mit dem Getriebeeingang, bezogen auf den abzubremsenden Teil der Bremseinrichtung. Beispielsweise kann dieser abzubremsende Teil als Scheibe ausgeführt sein, die insbesondere von der Getriebeeingangswelle getragen wird, und vorteilhaft zwischen Bremsbacken mit Bremsklötzen mehr oder minder stark eingespannt wird.

Wie durch die Merkmale des unabhängigen Verfahrensanspruchs beschrieben wird, kann mittels des erfindungsgemäß ausgeführten Fahrzeugantriebsstranges durch Abbremsen und/oder Festsetzen der Getriebeeingangswelle mit der dem Turbinenrad zugeordneten Bremseinrichtung das Getriebe beim Schalten oder Einlegen eines Ganges synchronisiert werden, das Fahrzeug, beispielsweise beim Rangieren, abgebremst werden, oder das Fahrzeug beim Anfahren gegen ein Rückrollen gesichert werden.

Beispielsweise kann die Synchronisation mittels des Abbremsens der Getriebeeingangswelle durch Schließen beziehungsweise Betätigen der Bremseinrichtung beim Einlegen eines Ganges bei stehendem Fahrzeug und laufendem Motor erfolgen, Auch ein Abbremsen der primärseitigen Getriebeteile beim Hochschalten ist möglich, um die entsprechenden beim Schalten zu verbindenden Getriebeteile zu synchronisieren.

Beim Rangieren kann beispielsweise das Fahrzeug durch vollständiges Schließen der Bremseinrichtung, das heißt durch Festsetzen der Getriebeeingangswelle, angehalten werden, und durch gezleltes Öffnen der Bremseinrichtung, beispielsweise durch Betreiben desselben in einem Reibzustand, kann ein vorgegebenes Abtriebsmoment an dem Getriebeausgang beziehungsweise den Antriebsrädern erzeugt werden, und damit jede gewünschte Rangiergeschwindigkeit eingestellt werden.

Bei der Verwendung der dem Turbinenrad zugeordneten Bremseinrichtung als Rückrollsicherung des Fahrzeugs beim Anfahren kann durch vollständiges Betätigen der Bremseinrichtung das Fahrzeug festgesetzt und ein Zurückrollen vollständig vermieden werden. Auch beim Anfahren an großen Steigungen kann die Bremseinrichtung so lange die Getriebeeingangswelle festsetzen, bis durch den Antriebsmotor ein ausreichend großes Antriebsmoment geliefert wird, das ein Zurückrollen des Fahrzeugs verhindert. Hierzu kann beispielsweise mittels einer Steuereinrichtung das vom Antriebsmotor gelieferte Antriebsmoment mit einem in Abhängigkeit der Schrägstellung des Fahrzeugs beziehungsweise der Steigung der gerade befahrenen Strecke vorgegebenen Antriebsmoment verglichen werden, oder zusätzlich oder alternativ ein Zurückrollen des Fahrzeugs nach dem Lösen der Bremseinrichtung sofort erfasst werden und als Entscheidung zum sofortigen erneuten Festsetzen der Getriebeeingangswelle mittels der Bremseinrichtung verwendet werden.

Beim Stillstand des Fahrzeugs kann die hydrodynamische Kupplung, wenn sie als durchflossene beziehungsweise regelbare hydrodynamische Kupplung ausgeführt ist, bis auf eine vorgegebene Restarbeitsmediummenge beziehungsweise vollständig entleert werden, um den Kraftstoffverbrauch des Antriebsmotors im Leerlauf zu vermindern. Auch hierzu kann eine geeignete Steuervorrichtung vorgesehen sein, welche einen Stillstand des Fahrzeugs erfasst und das Entleeren der Kupplung einleitet beziehungsweise zum erneuten Losfahren ein erneutes Befüllen der Kupplung bewirkt.

Wenn vor dem Getriebe ein hydrodynamischer Wandler vorgesehen ist, welcher, wenn das Getriebe als Automatgetriebe ausgeführt ist, zusätzlich zu dem Wandler im Automatgetriebe in dem Kraftfahrzeugantriebsstrang vorgesehen ist, oder aber auch der im Automatgetriebe angeordnete Wandler ist, so kann dieser Wandler beispielsweise als Trilok-Wandler ausgeführt sein, das heißt als ein Wandler, der ein Pumpenrad, ein Turbinenrad und ein feststellbares Leitrad aufweist. Das Leitrad kann beispielsweise mittels derselben Bremseinrichtung festgesetzt werden, mit welcher auch das Turbinenrad festgesetzt wird. Insbesondere erfolgt jedoch das Festsetzen des Leitrads unabhängig von dem Festsetzen des Turbinenrads, das heißt die beiden Räder müssen nicht stets gleichzeitig festgesetzt und freigegeben werden. Wenn das Leitrad festgesetzt ist, kann das Antriebsmoment, welches auf das Pumpenrad übertragen wird, gewandelt werden, das heißt am Turbinenrad kann ein anderes, insbesondere größeres Drehmoment abgegeben werden, als am Pumpenrad in den Wandler eingeleitet wird. Wenn das Leitrad gelöst ist, arbeitet der hydrodynamische Wandler wie eine hydrodynamische Kupplung, das heißt das am Pumpenrad anliegende Drehmoment ist stets gleich dem am Turbinenrad abgegebenen Drehmoment,

Somit kann einerseits im Kupplungsbetrieb der Übertragungswirkungsgrad des Wandlers verbessert werden und andererseits im Wandlerbetrieb eine Zugkrafterhöhung bewirkt werden.

Alternativ kann der Wandler ein stets feststehendes Leitrad aufweisen.

Die Bremseinrichtung, welche dem Turbinenrad zugeordnet ist und mittels weicher somit die Getriebeeingangswelle abgebremst und/oder festgesetzt werden kann, kann beispielsweise in Form einer Reibbremse mit einer Bremsscheibe ausgeführt sein, wobei die Bremsscheibe direkt (unmittelbar) oder mittelbar von der Getriebeeingangswelle getragen wird. Alternativ oder zusätzlich kann die Getriebeeingangswelle, welche beispielsweise ausschließlich im Getriebe gelagert ist, das Turbinenrad und/oder wenigstens eine Kupplungshälfte der Überbrückungskupplung tragen, beispielsweise eine Reibscheibe der letzteren, wenn die Überbrückungskupplung in Form einer Reibkupplung ausgebildet ist. Die genannten Elemente - Bremsscheibe der Bremseinrichtung, Turbinenrad der hydrodynamischen Kupplung oder des hydrodynamischen Wandlers und Kupplungshälfte, insbesondere Reibscheibe der Überbrückungskupplung - können somit fliegend auf der Turbineneingangswelle gelagert sein. Auch weitere Bauteile, zum Beispiel das Pumpenrad der hydrodynamischen Kupplung und/oder die zweite Kupplungshälfte der Überbrückungskupplung, können mittelbar von der Getriebeeingangswelle getragen werden, wenn Maßnahmen vorgesehen sind, um die Drehzahlen dieser Bauteile von den zuvor genannten Bauteilen abzukoppeln,

Die Erfindung soll nachfolgend anhand von zwei Ausführungsbeispielen dargestellt werden.

Es zeigen:
- Figur 1: ein erstes Ausführungsbeispiel eines erfindungsgemäß ausgeführten Fahrzeugantriebsstranges mit einer hydrodynamischen Kupplung;
- Figur 2: ein zweites Ausführungsbeispiel eines erfindungsgemäß ausgeführten Fahrzeugantriebsstrangs mit einem hydrodynamischen Wandler.

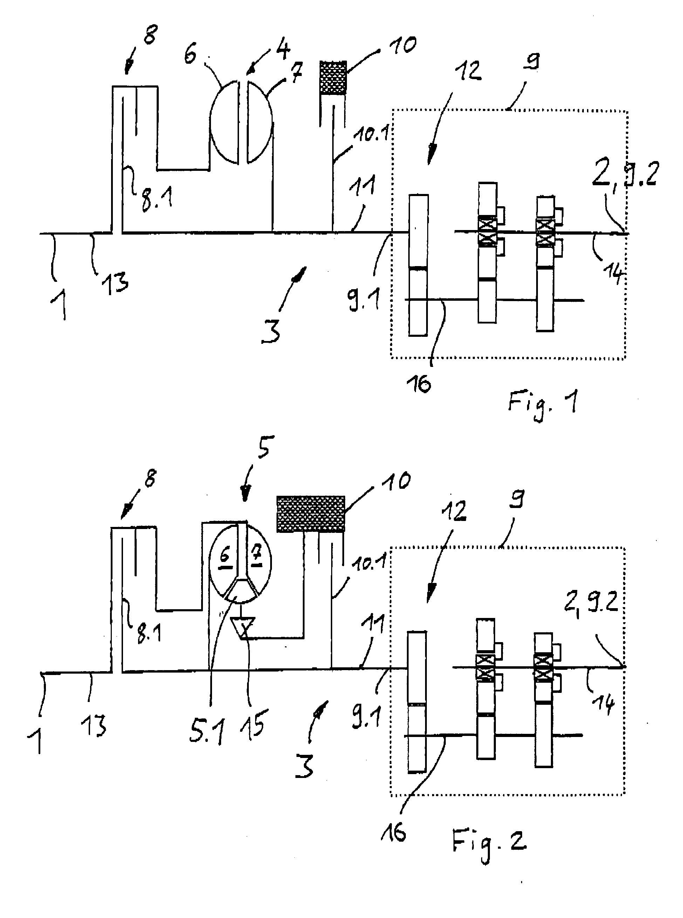

In der Figur 1 erkennt man einen erfindungsgemäß ausgebildeten Fahrzeugantriebsstrang, dessen Eingang 1 unmittelbar oder mittelbar in einer Triebverbindung mit einem Antriebsmotor (nicht gezeigt) steht, und dessen Ausgang 2 unmittelbar oder mittelbar mit einer oder mehreren Antriebsachsen mit den Antriebsrädern des Fahrzeugs (nicht gezeigt) in einer Triebverbindung steht.

In Richtung des Antriebsleistungsflusses beim Traktionsbetrieb gesehen besteht der Fahrzeugantriebsstrang aus einem Anfahrelement, umfassend die hydrodynamische Kupplung 4, die parallel hierzu angeordnete mechanische überbrückungskupplung 8 und die Bremseinrichtung 10, und dem Getriebe 9, welches, wie dargestellt, beispielsweise frei von hydrodynamischen Elementen sein kann. Das Getriebe 9 ist in der gezeigten Ausführung nach der Vorgelegewellenbauart ausgeführt, das heißt es umfasst einen Vorgelegesatz 12 mit einer Vorgelegewelle 16 (wobei auch mehrere Vorgelegesätze vorgesehen sein können - auch Splitgruppe genannt -) und ein Grundgetriebe mit einem Mehrgangteil, beispielsweise Vierganggrundgetriebe mit Rückwärtsgang. Auch wenn dies nicht dargestellt ist, können in Antriebsleistungsflussrichtung hinter dem Grundgetriebe noch eine oder mehrere Bereichsgruppen angeordnet sein, um die Anzahl der schaltbaren Gänge zu vervielfachen.

Der Getriebeausgang 9.2 bildet den Ausgang 2 des Kraftfahrzeugantriebsstranges, Der gezeigte Teil des Fahrzeugsantriebsstrang, beginnend an dessen Eingang 1 und endend an dessen Ausgang 2 kann in einem gemeinsamen Kraftfahrzeugsgetriebegehäuse angeordnet sein und dem Antriebsmotor, Insbesondere der Brennkraftmaschine, des Fahrzeugs unmittelbar nachgeschaltet sein, so dass beispielsweise die Kurbelwelle des Motors koaxial an die Eingangswelle 13 in einer Triebverbindung angeschlossen ist.

Der Getriebeeingang 9,1 wird durch die Getriebeeingangswelle 11 gebildet, wobei der Getriebeeingang 9.1 der einzige im Getriebe 9 vorgesehene Getriebeeingang ist. Gleichzeitig ist die Getriebeeingangswelle 11 die einzige im Getriebeeingang 9.1 vorhandene Welle. Die Getriebeeingangswelle 11 ist dabei einstückig ausgebildet, das heißt sie umfasst beispielsweise keine ineinander geschachtelten Hohlwellen mit gegebenenfalls einer Vollwelle, wie dies bei bekannten Ausführungen üblich ist.

Wie man sieht, umfasst der gezeigte Antriebsstrang 3 zwischen dem Eingang 1 und dem Ausgang 2 drei koaxial zueinander angeordnete Wellen, nämlich die Eingangswelle 13, welche eine Kupplungshälfte der Überbrückungskupplung 8 sowie das Pumpenrad 6 der hydrodynamischen Kupplung trägt, die Getriebeeingangswelle 11 und die Getriebeausgangswelle 14. Eine andere, nicht koaxiale Anordnung der Wellen oder eine andere Anzahl von Wellen ist möglich.

Die Überbrückungskupplung 8 ist in Form einer Reibkupplung mit einer Reibscheibe 8.1 ausgeführt. Die erste Kupplungshälfte, nämlich die Reibscheibe 8.1, wird durch die Getriebeeingangswelle 11 getragen, wohingegen die zweite Kupplungshälfte durch die Eingangswelle 13 getragen wird. Die Reibkupplung kann beispielsweise als Einscheiben-Trockenkupplung oder als Zweischeiben-Trockenkupplung ausgeführt sein. Das geeignete Kupplungsdesign ist dem Fachmann bekannt.

Die Getriebeeingangswelle 11 trägt ferner das Turbinenrad 7 der hydrodynamischen Kupplung 4, wohingegen das Pumpenrad 6 mit der Drehzahl der zweiten Kupplungshälfte der Überbrückungskupplung 8 umläuft.

Schließlich trägt die Getriebeeingangswelle 11 die Bremsscheibe 10.1 der dem Turbinenrad 7 zugeordneten Bremseinrichtung 10, wobei diese Bremseinrichtung aufgrund ihrer Funktion auch als Turbinenbremse bezeichnet werden kann.

Sämtliche genannten Bauelemente des Anfahrelementes, das heißt jene Bauelemente, die in den Figuren links von dem Getriebe 9 dargestellt sind, können gemäß einer vorteilhaften Ausführung innerhalb von einem Getriebegehäuse oder an einem Getriebegehäuse des Getriebes 9 angeordnet sein. Ungeachtet hiervon wird im Rahmen der vorliegenden Beschreibung zwischen den Bauteilen des Getriebes 9, beispielsweise die Gangstufen sowie Vorgelegesätze und Bereichsgruppen, und den Bauelementen des Anfahrelementes außerhalb des Getriebes 9 unterschieden,

Aufgrund dessen, dass die Getriebeeingangswelle 11 sowohl die Bremsscheibe 10.1 als auch das Turbinenrad 7 kraftschlüssig und/oder formschlüssig trägt, wird beim Betätigen der Bremseinrichtung 10 sowohl die Getriebeeingangswelle 11 als auch das Turbinenrad 7 abgebremst und/oder festgesetzt. Dementsprechend wird auch das erste Zahnrad des Vorgelegesatzes 12, welches mit dem zweiten Zahnrad auf der Vorgelegewelle 16 kämmt, abgebremst und/oder festgesetzt, und in Abhängigkeit der Gangstellung im Getriebe 9 werden weitere Getriebeelemente bis hin zur Getriebeausgangswelle 14 abgebremst und/oder festgesetzt.

Bei der gezeigten Ausführung wird bewusst in Kauf genommen, dass die hydrodynamische Kupplung 4 im Hinblick auf die Getriebeeingangswelle 11 und somit die Getriebeabtriebswelle 14 nicht mehr als hydrodynamische Bremse geschaltet werden kann. Um dies in einer alternativen Ausführung zu ermöglichen, müssten eine weitere Bremseinrichtung oder Feststelleinrichtung und eine trennbare Kupplung vorgesehen sein, um das Pumpenrad 6 oder das Turbinenrad 7 der hydrodynamischen Kupplung 4 festzusetzen. Dies kann durchaus gemäß einer Ausführung der vorliegenden Erfindung vorgesehen sein.

Bei der in der Figur 2 gezeigten Darstellung sind dieselben Bauteile mit denselben Bezugszeichen beziffert. Wie man sieht, ist der einzige Unterschied zu der in der Figur 1 gezeigten Ausführung, dass anstelle der hydrodynamischen Kupplung 4 ein hydrodynamischer Wandler 5 vorgesehen ist.

Der hydrodynamische Wandler 5 umfasst neben dem Pumpenrad 6 und dem Turbinenrad 7 ein Leitrad 5,1, das bei der gezeigten Ausführung mit einem Freilauf 15 versehen ist, um den Wandler wie eine hydrodynamische Kupplung arbeiten lassen zu können. Auf der anderen Seite ist das Leitrad 5.1 mittels der Bremseinrichtung 10 feststellbar. Diese Bauform von hydrodynamischem Wandler 5 ist als Trilok-Wandler bekannt,

## Patentansprüche

1. Fahrzeugantriebsstrang
1.1 mit einem Eingang (1) zum Einleiten einer Antriebsleistung von einem Antriebsmotor des Fahrzeugs;
1.2 mit einem Ausgang (2) zum Abgeben der Antriebsleistung auf Antriebsräder des Fahrzeugs;
1.3 mit einem Antriebsstrang (3) zum Übertragen der Antriebsleistung vom Eingang (1) zum Ausgang (2), wobei der Antriebsstrang (3) eine hydrodynamische Kupplung (4) oder einen hydrodynamischen Wandler (5) zum hydrodynamischen Anfahren des Fahrzeugs umfasst;
1.4 die hydrodynamische Kupplung (4) oder der hydrodynamische Wandler (5) weist ein Pumpenrad (6) und ein Turbinenrad (7) auf, welche mittels einer mechanischen Überbrückungskupplung (8) mechanisch miteinander verbindbar sind;
1.5 der Antriebsstrang (3) umfasst ferner ein Getriebe (9) mit einem Getriebeeingang (9.1) und einem Getriebeausgang (9.2), wobei der Getriebeausgang (9.2) in einer mechanischen Triebverbindung mit dem Ausgang (2) steht, in eine solche schaltbar ist oder den Ausgang (2) ausbildet;
1.6 das Pumpenrad (6) steht in einer mechanischen Triebverbindung mit dem Eingang (1) oder ist in eine solche schaltbar, und das Turbinenrad (7) steht in einer mechanischen Triebverbindung mit dem Schaltgetrlebeeingang (9.1) oder ist in eine solche schaltbar:
1.7 dem Turbinenrad (7) ist eine Bremseinrichtung (10) zugeordnet, um das Turbinenrad (7) abzubremsen und/oder festzusetzen;
**dadurch gekennzeichnet, dass**
1.8 die hydrodynamische Kupplung (4) oder der hydrodynamische Wandler (5) ausschließlich über einen einzigen Getriebeeingang (9.1) mit einer einzigen Getriebeeingangswette (11) in einer Triebverbindung mit dem Getriebe (9) steht, und diese Getriebeeingangswelle (11) mittels der Bremseinrichtung (10) für das Turbinenrad (7), welche als mechanische Reibbremseinrichtung ausgeführt ist, abbremsbar und/oder festsetzbar ist, und
1.9 die Triebverbindung frei von einem Freilauf und einer Trennkupplung ist.

2. Fahrzeugantriebsstrang gemäß Anspruch 1, **dadurch gekennzeichnet, dass** das Getriebe (9) ein manuelles Schaltgetriebe, automatisiertes Schaltgetriebe oder Automatgetriebe oder ein Teil eines solchen ist.

3. Fahrzeugantriebsstrang gemäß einem der Ansprüche 1 oder 2, **dadurch gekennzeichnet, dass** die Bremseinrichtung (10) eine Reibbremse mit einer Bremsscheibe (10.1) ist, und die Bremsscheibe (10.1) direkt oder mittelbar von der Getriebeeingangswelle (11) getragen wird.

4. Fahrzeugantriebsstrang gemäß einem der Ansprüche 1 bis 3, **dadurch gekennzeichnet, dass** die Getriebeeingangswelle (11) wenigstens das Turbinenrad (7), die Bremseinrichtung (10), insbesondere deren Bremsscheibe (10.1), und wenigstens eine Kupplungshälfte der Überbrückungskupplung (8) direkt oder mittelbar trägt.

5. Fahrzeugantriebsstrang gemäß einem der Ansprüche 1 bis 4, **dadurch gekennzeichnet, dass** die Überbrückungskupplung (8) in Form einer Reibkupplung ausgebildet ist, welche insbesondere eine Reibscheibe (8.1) aufweist, die von der Getriebeeingangswelle (11) direkt oder mittelbar getragen wird.

6. Fahrzeugantriebsstrang gemäß einem der Ansprüche 1 bis 5, **dadurch gekennzeichnet, dass** die hydrodynamische Kupplung (4), welche insbesondere die einzige hydrodynamische Maschine in dem Antriebsstrang (3), insbesondere dem gesamten Fahrzeugantriebsstrang ist, gegebenenfalls mit Ausnahme eines oder mehrerer zusätzlich vorgesehenen hydrodynamischen Retarders/Retarder, der/die insbesondere auf einem Nebenabtrieb des Getriebes angeordnet ist/sind. frei von einem Leitrad oder von Leitschaufeln ist und ausschließlich ein beschaufeltes Pumpenrad (6) und ein beschaufeltes Turbinenrad (7) als beschaufelte Bauteile oder umlaufende Bauteile aufweist.

7. Fahrzeugantriebsstrang gemäß einem der Ansprüche 1 bis 5, **dadurch gekennzeichnet, dass** der hydrodynamische Wandler (5), welcher insbesondere als Trilok-Wandler ausgebildet ist, die einzige hydrodynamische Maschine in dem Antriebsstrang (3), insbesondere dem gesamten Fahrzeugantriebsstrang ist, gegebenenfalls mit Ausnahme eines oder mehrerer zusätzlich vorgesehenen hydrodynamischen Retarders/Retarder, der/die insbesondere auf einem Nebenabtrieb des Getriebes angeordnet ist/sind.

8. Fahrzeugantriebsstrang gemäß einem der Ansprüche 1 bis 7, **dadurch gekennzeichnet, dass** das Getriebe (9) wenigstens einen Vorgelegesatz (12) mit eine Vorgelegewelle (13) aufweist.

9. Fahrzeugantriebsstrang gemäß einem der Ansprüche 7 oder 8, **dadurch gekennzeichnet, dass** der hydrodynamische Wandler (5) als Trilok-Wandler ausgeführt ist, der ein feststellbares Leitrad (5.1) aufweist, und das Leitrad (5,1) durch die Bremsvorrichtung (10), insbesondere unabhängig von der Abbremsung oder Feststellung des Turbinenrads (7) abbremsbar und/oder feststellbar ist.

10. Verfahren zum Antreiben eines Kraftfahrzeugs mit einem Fahrzeugantriebsstrang gemäß einem der Ansprüche 1 bis 9, **dadurch gekennzeichnet, dass** mit der Bremseinrichtung (10) die Getriebeeingangswelle (11)
- zum Synchronisieren beim Schalten oder Einlegen eines Ganges des Getriebes (9),
- zum Abbremsen des Fahrzeugs beim Rangieren und/oder
- zur Rückrollsicherung des Fahrzeugs beim Anfahren abgebremst und/oder festgesetzt wird.
